# EUROPEAN PATENT SPECIFICATION

(11) **EP 2 729 636 B1**
(45) Date of publication and mention of the grant of the patent: **13.09.2017**
(21) Application number: 12745514.5
(22) Date of filing: 05.07.2012
(51) Int. Cl.: E04C 2/16, C04B 18/24, C04B 18/26

(54) **PANEL MADE OF A SHEET-SHAPED MATERIAL AND METHOD FOR THE PRODUCTION THEREOF**
PANEEL AUS EINEM BLATTFÖRMIGEM MATERIAL UND VERFAHREN ZUR HERSTELLUNG
PANNEAU CONSTITUÉ D'UN MATÉRIAU EN FORME DE FEUILLE ET SON PROCÉDÉ DE PRODUCTION

(30) Priority: 08.07.2011 BE 201100421
(43) Date of publication of application: 14.05.2014
(73) Proprietor: Oosterlynck, Lin-Luc, 9000 Gent (BE)
(72) Inventor: Oosterlynck, Lin-Luc, 9000 Gent (BE)
(74) Representative: Ostyn, Frans
(86) International application number: PCT/IB2012/001325
(87) International publication number: WO 2013/008069

(56) References cited:
- WO-A1-03/033226
- DE-A1- 4 211 732
- DE-A1- 19 811 805
- DE-A1- 19 858 756

## Description

The present invention relates in general to a panel, made of sheet-shaped material in which long natural fibres form a fibre layer in which the fibres extend substantially in a same direction and are held together by a bonding agent. Furthermore, the present invention also relates to a method for producing such panels. The present invention also relates, in particular, to a method for producing multilayered (i.e. composed of at least two layers) panels. It is here emphasized that the term panels refers not only to flat panels or plates, but that also corrugated and curved panels, sandwich panels and any other types of composed panels, regardless of their shape, dimensions or field of application, fall within the scope of the present invention.

It is known to produce panels from natural raw materials, so that they are recyclable. Examples thereof are given in the following patents: US 2006096240, WO 2008129113, GB 2301122 and WO 98/31626. DE 198 58 756 A1 discloses a method for producing according to the preamble of claim 1 and also a panel according to the preamble of claim 13. In the wood industry, it is also known to produce particle boards from a mixture of wood fibres and thermosetting resins. These resins are not recyclable and are, moreover, also injurious to health. Although other, very heavy panels described in the above-specified patents are made of recyclable materials, in the production thereof the component parts of these panels must be compressed at high pressure and at high temperature. These production methods are complex and laborious, consume a great deal of energy and require, moreover, the use of particular production means.

The object of the present invention is to remedy these drawbacks by providing a panel which is made of a sheet-shaped recyclable material and which can be produced very easily and at relatively low cost with simple production means.

This object is achieved by providing a method for producing a panel made of sheet-shaped material in which natural fibres are held together by a bonding agent, wherein from long natural fibres is formed a fibre layer in which the fibres extend substantially in a same direction, wherein, according to the present invention, an inorganic alkaline bonding agent is used to connect these fibres to one another, the bonding agent is applied to the fibre layer or the fibre layer is dipped (steeped) in the bonding agent, after which the whole is dried and subjected to a calendaring operation and wherein the bonding agent is substantially a bonding agent on a sodium silicate or potassium silicate base and the bonding agent comprises an elastomer.

In the production of panels according to the present invention, the fibre layer, for example, can be dipped in the bonding agent in a vat. After this, the whole is dried. During a calendering operation, the fibre layer is compressed. This allows flat plates to be obtained. In other words, this calendering operation is a pressing operation. This pressing operation can occur in a continuously running process, but can also be conducted in a discontinuous operation. The panels can, after their production, be thermally deformed or extruded for example, into corrugated sheets, sandwich panels, composite panels or any shaped part whatsoever, such as, for example, pipes or profiles.

The above object is likewise achieved by providing a panel, made of sheet-shaped material in which long natural fibres form a fibre layer in which the fibres extend substantially in a same direction and are held together by a bonding agent, and in which, according to the present invention, the fibres are connected to one another by an inorganic alkaline bonding agent which was applied to the fibre layer or in which the fibre layer was dipped, after which the whole has been dried and subjected to a calendering operation. The method according to the present invention is fairly simple and can be executed with simple and energy-efficient production means. The thus made panels are, moreover, fully recyclable. The long natural fibres, which extend substantially in the same direction, give the panel sufficient strength and resistance to bending, so that it is suitable for various applications.

Panels which are produced according to this method are also particularly well suited to the production of laminated panels, wherein two or more of these single panels are mutually connected, lying one upon the other, by joining together a plurality of single panels into a multilayered panel. Preferably, two panels situated one above the other respectively here have a mutually different (for example a mutually perpendicular) fibre direction. This ensures resistance to bending in two different directions. As a result of these crossing fibre directions, an excellent bonding between the panels lying one upon the other is also obtained moreover.

It is known that laminated panels boast many applications in the construction industry. In addition, such panels can be used, for example, also for military objectives, and various applications are also known in the automotive industry.
Not only from single-layered panels, but also from such multilayered panels, it is possible to produce various products which have the required strength for very diverse applications, such as, inter alia, sandwich panels, corrugated sheets and insulation material. These multilayered panels can also be thermally deformed.
In the method and the panel according to the present invention, use is preferably made of fibres of which at least 90% (preferably 95 %) have a length of at least 10 cm. These fibres generally have a length between 10 cm and 90 cm. Preferably, use is made of fibres of which at least 50 % have a length of more than 50 cm. Still more preferably, at least 2/3 of the fibres have a length greater than 50 cm. Yet more preferably, at least 75% of the fibres are longer than 50 cm.

Furthermore, it is also preferred to use for this purpose bast fibres, such as, inter alia, fibres obtained from flax, hemp, ramie, sisal, coir hair, jute or urtica nettle. A bonding agent on a sodium silicate (water glass) or potassium silicate base is substantially used. These salts of silicic acid are soluble in water, whereby the panels according to the present invention are very easily recyclable, whereby the separate raw materials can be easily recovered. In addition, they ensure very good adhesion to cellulose fibres and are non-inflammable.

These bonding agents can be delivered both dry (in powder form) and in the form of a liquid. The liquid should be delivered, for example, with a density of 36° Baumé (i.e. 45 % dry substance). This substance should normally be watered down. One should aim to obtain, for example, 15 to 50 % by weight dry substance relative to the total weight of the panel formed with this bonding agent. The bonding agent also comprises an elastomer, preferably styrene-butadiene rubber and/or natural latex. This is done primarily to obtain a flexible and resilient structure. The relationship of the weight of this elastomer to the total dry weight of bonding agent is preferably greater than 10%, preferably about 30 %. This elastomer should be of the SBR type (styrene-butadiene rubber) or of the natural latex type, vulcanized or not, loaded or not.

During the combing of the fibres in the course of a spinning process, a widely spread fibre group (in practice known as a fleece), in which the fibres extend side by side substantially in the same direction, is obtained. Preferably, one or more mutually adjacent fibre groups from the spinning process are used to form the said fibre layer. The bast fibres, which from the initial stage of the spinning process have been deposited in the longitudinal direction, are supported, in this combing process, for example, by forerunning steel combs, known as gills. There a 40 cm wide fleece is formed. In the processing of flax, a fleece of about 70 g/m² is generally obtained, which fleece is displaced at a rate of 35 m/min. For many industrial applications, larger widths, for example 150 cm to 250 cm, are required. In order to obtain construction units of larger width, a plurality of fleeces of 40 cm must then be placed side by side to form a fibre layer of the necessary width.

The said fibre layer can also be formed by placing a number of wicks or slivers formed during the spinning process side by side and joining them together into a cohesive fibre layer by a weaving process, a sewing process or a needling method. During the spinning process, more specifically at the stage of the flyer frame, just before the actual fine spinning begins, the fibres are joined together in relatively thin bundles, known as wicks. These wicks are preferably twistless. This arrangement in the longitudinal direction (warp direction) takes place on a traditional warping machine.

On a weaving loom, it is occasionally necessary, for example, to use a few thin warp threads to connect to one another the wicks extending in the weft direction. A cohesive fibre layer of this type is, of course, easier to handle.

One particular method according to the present invention consists in forming at least two sheet-shaped panels according to the above-specified method according to the present invention, and to connect these sheet-shaped panels to one another, lying one above the other, to form a multilayered panel, this ensuring that every two sheet-shaped construction units lying one above the other have a different fibre direction. A laminated panel which exhibits adequate strength and bending resistance in different directions is hereby obtained. Between the fibre directions of two sheet-shaped construction units lying one above the other, an angle of about 90° or about 45° is respectively assumed, for example.

A series of band-shaped panels can also be formed according to the method according to the present invention and these band-shaped panels are woven together. The band-shaped panels can also be connected to one another, wherein the connected band-shaped panels overlap in different directions, for example at an angle of 45°, in relation to one another and partially overlap one another. The overlapping parts are then connected to one another, preferably with the same bonding agent as that from which the panels themselves are formed. Both the single panels produced according to the present invention and the multilayered panels can be used to form composed panels. To this end, a first, a second and a third plate for example, is formed (in single or multilayered form) according to the method according to the present invention, wherein the first plate is a corrugated or ribbed plate, or, after the production thereof, is deformed into a corrugated or ribbed plate, wherein the second and the third plate are realized substantially flat, and wherein the said first plate is placed between the second and the third plate and is connected thereto, so that a composed plate is obtained, wherein the fibre directions of the second and/or the third plate run transversely to the direction in which the ribs or corrugations in the intervening second plate extend.

A composed plate of this type has a strength which is ample for various applications, inter alia in the construction industry.

Another type of composed panel is obtained by forming a first and a second plate according to the method according to the present invention, and by placing between this first and second plate, which are realized substantially flat, an intermediate layer having honeycomb structure, and connecting this to them, so that a composed plate is obtained.

In the case of the above-described composite plates, the side edges can be sealed in an airtight manner and at least a portion of the air in the inner open space of the composed plate can be drawn off. A plate having high insulating capacity and very low inflammability is thus obtained. The inner open space of the composed plate can also at least partially be filled with an insulating filler, such as expanded clay or vermiculite.

In all applications where vertically stacked parts of sheet-shaped panels are connected to one another by means of a bonding agent, a bonding agent substantially consisting of sodium silicate or potassium silicate is preferably used. Depending on the field of application, an elastomer, preferably styrene-butadiene rubber and/or natural latex, can be added to the bonding agent.

The mutual connection of vertically stacked parts of sheet-shaped panels according to the present invention is preferably effected by dissolving a part of the bonding agent which is present in these panels. To this end, at least one of the panels to be connected can be re-wetted, for example.

In addition, one or more of the following treatments can also be applied:
a) the addition of water-repellent substances and/or a sheet, such as, for example, a cover sheet made of polyethylene, aluminium or parafined paper;
b) the addition of an anti-bacterial product;
c) treatment of the surface of the construction unit with an acid, preferably diluted, to harden the surface;
d) subjection of the bast fibres to a wash before they are added to the bonding agent; and/or
e) the application of a top layer of a thermosetting plastic, such as, for example, bakelite.

One particular embodiment of a construction unit according to the present invention is composed of at least two sheet-shaped panels according to the present invention which are vertically stacked and mutually connected, of which every two sheet-shaped panels lying one above the other have a different fibre direction. The panel is produced from a panel produced according to the method specified further above.

The invention is now explained in greater detail with reference to the following more detailed description of a number of possible embodiments of single and multilayered panels according to the present invention and of their production methods.

The described embodiments and methods are merely examples and it is emphasized that these can by no means be regarded as limiting the scope of the protection as defined in the appended set of claims, nor the field of application of the present invention.

In this detailed description, reference is made by means of reference numerals to the hereto appended figures, whereof
- Figure 1 represents schematically in perspective and inside view the disassembled parts of a composed panel according to the invention;
- Figure 2 represents in side view another embodiment of a composed panel according to the invention;
- Figure 3 represents schematically in top view the disassembled layers of triple-layered panel according to the invention;
- Figure 4 represents a panel woven from band-shaped units in top view;
- Figure 5 represents a panel composed of band-shaped units stuck one upon another;
- Figure 6 represents a panel with openings for use as an alternative to geotextile;
- Figure 7 represents an intermediate layer with honeycomb structure for a composed panel;
- Figure 8 represents a number of different profiles, a pipe and a floor plate formed from sheet-shaped panels, wherein these panels are panels according to the invention;
- Figure 9 represents a non-cohesive fibre layer;
- Figure 10 represents a fibre layer consisting of a series of mutually adjacent wicks;
- Figure 11 represents a fibre layer consisting of a series of mutually adjacent yarns connected to one another by a weaving method;
- Figure 12 represents a fibre layer consisting of a series of mutually adjacent, sewn-together wicks;
- Figure 13 represents a relatively thick fibre layer brought to a cohesive whole by means of a needling process;
- Figure 14 schematically represents a device for realizing a possible production process according to the present invention;
- Figure 15 schematically represents a device for drying, calendering and rolling up and/or carrying off a panel.

According to the invention, so-called base plates can be made from a fibre layer, in which long natural fibres, for example flax fibres, obtained during the spinning process extend substantially in the same direction, and an inorganic alkaline bonding agent, for example water glass. The base plates can in themselves be used as a panel, but composed panels can also be formed therewith, such as sandwich panels or panels having an intermediate layer which is a corrugated sheet or ribbed plate or has a honeycomb structure.

The base plates can also be thermally deformed or construction units of a different shape can be formed by extrusion or pultrusion, such as, inter alia, various shaped parts (pipes, profiles, corrugated sheets, ...).

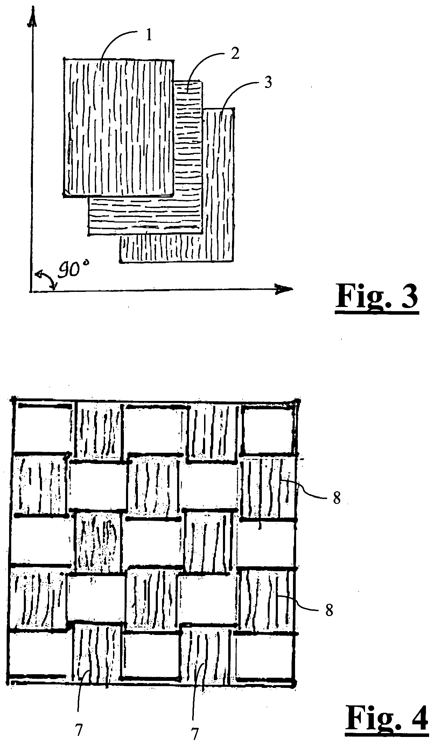

Such base plates can also be used to form laminated panels or plates therewith. As represented in Figure 3, three base plates (1), (2), (3) cut to suitable length can be stuck together using the same bonding agent (sodium silicate or water glass), and then the whole can be dried and compressed in order to obtain a layered complex such as plywood. It is assumed that such a laminated plate best consists of an odd number of plates (layers). The middle plate (2) has a fibre direction which is perpendicular to the fibre direction of the two other plates (1), (3).

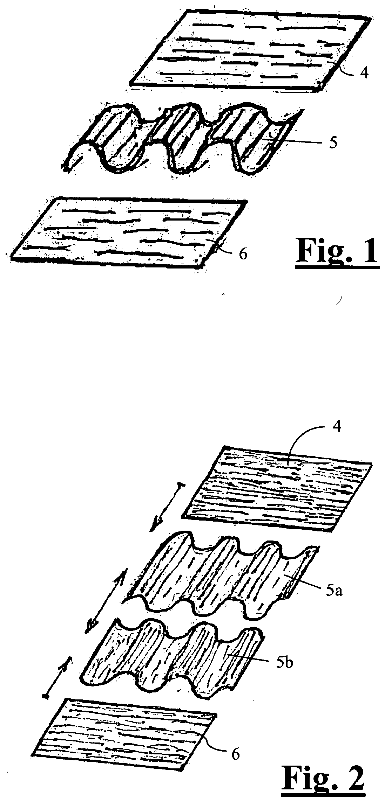

Figures 1 and 2 serve to illustrate that a composed panel can be formed from two flat panels (4), (6) and an intermediate corrugated sheet (5).

The intermediate corrugated sheet can be replaced by two corrugated sheets (5a), (5b) placed one upon the other, as shown in Figure 2. The fibre direction of the flat plates is perpendicular to the direction in which the corrugations of the intermediate corrugated sheet extend.

A panel can also be formed by chess-board weaving of bands (7), (8) having a width between 10 mm and 30 mm (see Fig. 4). After the wetting or re-wetting of bonding agent, and compression and drying, a bipolar complex, which can be used for a variety of purposes, is obtained. These bands can be single or layered.

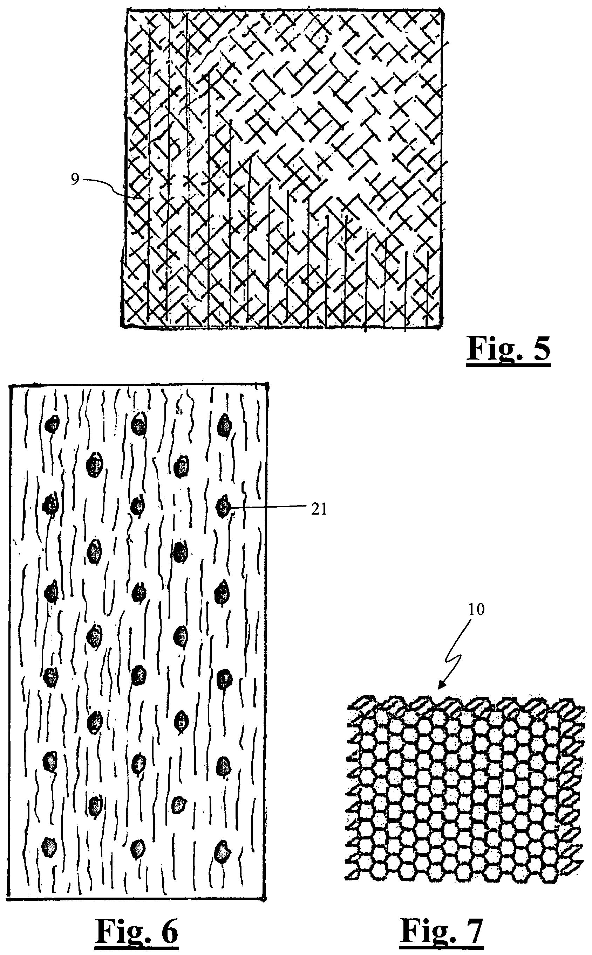

Such bands (9) can also be stuck together perpendicularly and at an angle of 45° relative to the edges of the thus formed panel, as represented in Figure 5. In this way, one obtains a plate in which the forces applied thereto are distributed proportionally over the entire complex.

Laminated panels, both single and layered, wherein the fibre direction can extend in one or more directions, can also be provided with holes (21) (see Figure 6) for use as a draining element in the ground and as an alternative to geotextile.

Sandwich panels comprising an intermediate layer having a honeycomb structure can also be formed. Such an intermediate layer (10) with honeycomb structure, which can itself also be produced from sheet-shaped material according to the invention, is represented in Figure 7. Such an intermediate layer (10) is added between two laminated plates (not represented) and is connected thereto to form a sandwich panel. Such sandwich panels can be used, for example, as partitions in the construction industry.

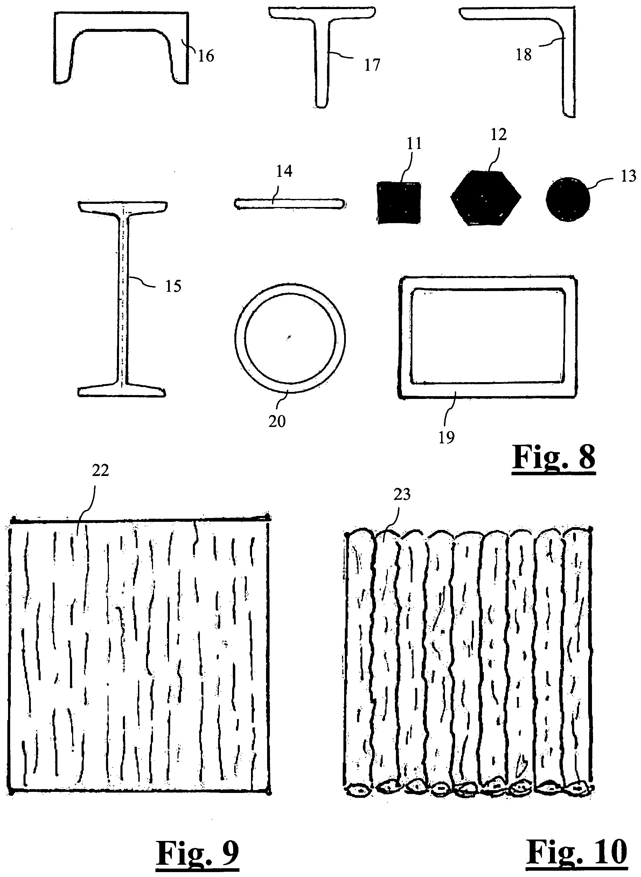

Both single plates having one fibre direction (unidirectional) and laminated plates having different fibre directions (multidirectional) can be formed by thermal deformation or extrusion or pultrusion into profiles (11)-(18) and pipes (19), (20), as represented in Figure 8. Floor plates, too, can be produced according to such a process. The tensioning of floor plates and supporting profiles and the like can be realized by means of a steel cable as is customary in respect of pre-stressed concrete.

The production process of the present invention comprises three stages:
1) the attainment of a fleece or a fibrous substrate;
2) the provision of this fleece or substrate with bonding agent;
3) the drying and removal of the unidirectionally layered material.

In the production process according to the present invention, a fibre layer must first be formed. The fibres can be gathered during the spinning process. In the spinning of natural fibres, there is in the combing a place where the fibres are widely spread. The bast fibres, which from the initial stage of the spinning process extend and are displaced in a same direction, are supported in the combing process by forerunning steel combs known as gills. There an approximately 40 cm wide fleece is formed. In flax processing, the fleece generally has a weight of almost 70 g/m² and is displaced at a rate of 35 m/min. A non-cohesive fibre layer (22) is represented in Figure 9.

The fibre layer can also be formed by placing a large number of thin wicks or slivers, which are found at the stage of the flyer frame, side by side, just prior to the actual fine spinning. This arrangement in the longitudinal direction (warp direction) takes place on a traditional warping machine. These wicks of titre Nm 0.5 (= 5g/m) are preferably twistless. Such a fibre layer (23) is shown in Figure 10.

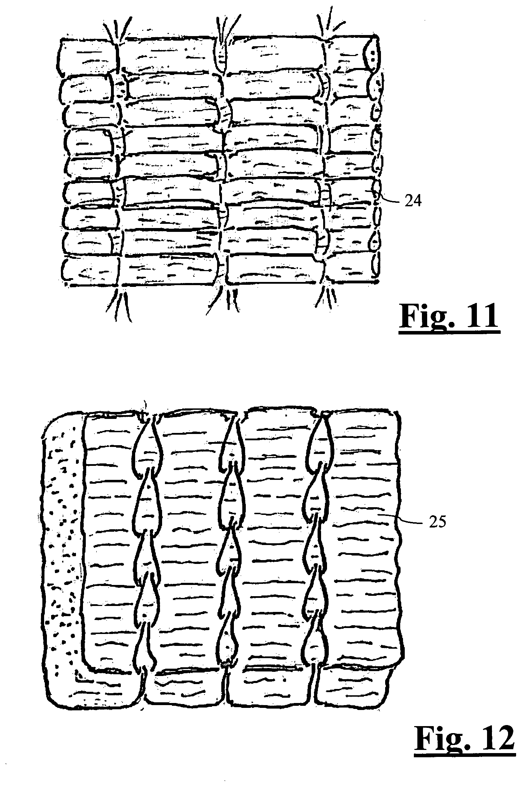

One way of obtaining a fibre layer (24) which is easy to handle is to weave these twistless wicks in the transverse direction (see Figure 11). The binding is of the "weft ribs" type. On a weaving machine, it is only occasionally necessary to use a few thin warp threads to bind the weft wicks.

Yet another way of obtaining a fibre layer (25) is to utilize the Malimo-Maliwatt method. This method allows the fleeces to be ordinarily sewn together with fibres lying in the transverse direction (see Figure 12).

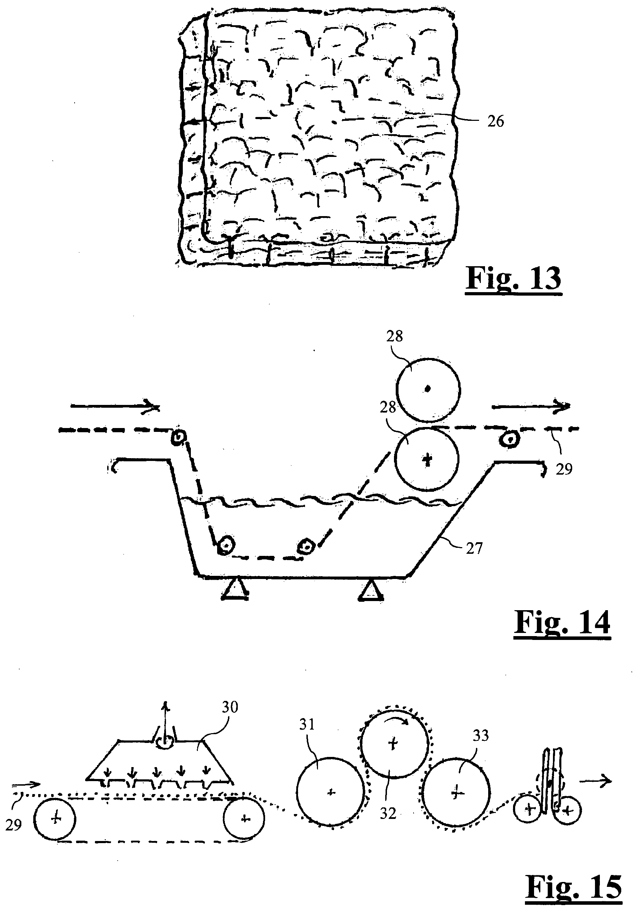

Another way of obtaining a thicker fibre layer (26) is to utilize the needling method. The transverse fibres are mechanically bound together by means of a number of 'harpoon needles', so that a mat is formed (see Figure 13).

Yet another way of obtaining a flat and thin fleece is to use the "wet route", as is customary in papermaking (not represented).

The thus formed fibre layer will either be dipped in full bath (see Figure 14) in a traditional stainless steel vat (27), or the bonding agent will be sprayed onto the fibre layer. This is followed by pressing between two rollers (28) in order to remove the excess bonding agent.

A suitable drying of the thus obtained whole (29) of fibre layer and bonding agent by means of a drying device (30) is followed by a pressing operation, wherein a calendering operation between rollers (31),(32),(33) is used to obtain a nice smooth laminated plate (see Figure 15). After this, the end product, for example a laminated plate, is rolled up or cut to size.

In a following stage, the cut-to-size laminated plates are wetted, so that the bonding agent is re-wetted, and a plurality of these plates are placed one upon the other such that the fibre direction of a plate is respectively perpendicular to the fibre direction of the underlying plate. The vertically stacked plates are then compressed in order finally to obtain a multilayered construction unit according to the present invention.

According to need, the bonding agent will be adapted to obtain a flexible laminated plate which is resilient. The basic formula will then contain a certain percentage of an elastomer, between 10 and 30 %, or more, of the total dry weight of bonding agent. This elastomer will be of the SBR type (styrene-butadiene rubber) or of natural latex, vulcanized or not, loaded or not.

Another option in the implementation of the method according to the present invention is to add heavy metals, such as graphite, in order to reduce the water solubility of the bonding agent (make it hydrophobic).

In order to obtain a very hard enamel-like surface, the surface of the panel or other construction unit can be treated with a diluted acid. In order to be able to obtain better adhesion of bonding agent to bast fibres, the bast fibres can previously be subjected to a thorough wash. The excess of pectin, inter alia, is thereby removed. The wash can also be utilized to add an anti-bacterial and/or fungicidal product.

A sandwich panel according to the present invention can also be provided with a bakelite top layer to enable it to be used as shuttering material for making concrete constructions.

## Claims

1. Method for producing a panel (1)-(6); (1,2,3); (4,5,6); (11)-(21) made of sheet-shaped material in which natural fibres are held together by a bonding agent, wherein from long natural fibres is formed a fibre layer (22)-(26) in which the fibres extend substantially in a same direction, **characterized in that** an inorganic alkaline bonding agent is used to connect the fibres to one another, **in that** the bonding agent is applied to the fibre layer (22)-(26) or the fibre layer is soaked in the bonding agent, after which the whole is left to dry and subjected to a calendering operation, and **in that** the bonding agent is substantially a bonding agent on a sodium silicate or potassium silicate base and the bonding agent comprises an elastomer.

2. Method for producing a panel (1)-(6); (1,2,3); (4,5,6); (11)-(21) made of sheet-shaped material according to claim 1, **characterized in that**, the relationship of the weight of the elastomer to the total dry weight of bonding agent is greater than 10%.

3. Method for producing a panel (1)-(6); (1,2,3); (4,5,6); (11)-(21) made of sheet-shaped material according to claim 1 or 2, **characterized in that** at least 90%, preferably at least 95 % of the said fibres have a length of at least 10 cm.

4. Method for producing a panel made of sheet-shaped material according to any of the preceding claims, **characterized in that** the said fibres are substantially bast fibres, such as, inter alia, fibres obtained from flax, hemp, ramie, sisal, coir hair, jute or urtica nettle.

5. Method for producing a panel made of sheet-shaped material according to any of the preceding claims, **characterized in that**, during the combing of the fibres in the course of a spinning process, a widely spread fibre group, in which the fibres extend side by side substantially in the same direction, is obtained, and **in that** one or more mutually adjacent fibre groups from the spinning process is used to form the said fibre layer.

6. Method for producing a panel made of sheet-shaped material according to any of claims 1 to 4, **characterized in that** the said fibre layer (23), (24) is formed from a number of fibre bundles or wicks formed during the spinning process and placed side by side, and **in that** the mutually adjacent fibre bundles (23)-(26) or wicks are joined together into a cohesive fibre layer by a weaving process, a sewing process or a needling process..

7. Method for producing a multilayered panel **characterized in that** at least two sheet-shaped panels (1),(2),(3); (4),(5),(6) are formed according to the method according to one of the preceding claims, and **in that** these sheet-shaped panels are connected to one another, lying one above the other, so that a multilayered panel (1-3), (4-6), in which every two sheet-shaped panels lying one above the other have a different fibre direction, is formed.

8. Method for producing a multilayered panel made of sheet-shaped material according to claim 7, **characterized in that** between the fibre directions of two vertically stacked sheet-shaped panels there is respectively provided an angle of about 90° or about 45°.

9. Method for producing a panel according to any of the preceding claims, **characterized in that** a series of band-shaped panels (7), (8), (9) is formed according to a method according to one of the preceding claims, and **in that** these band-shaped panels (7), (8), (9) are woven together or are connected to one another such that they extend in different directions and partially overlap one another.

10. Method for producing a panel made of sheet-shaped material according to any of the preceding claims, **characterized in that** the panel, after its production, is thermally deformed or extruded.

11. Method for producing a panel made of sheet-shaped material according to any of claims 1 to 10, **characterized in that** a first and a second plate is formed according to the method according to one of the preceding claims, **in that** between this first and second plate, which are realized substantially flat, an intermediate layer having a honeycomb structure (10) is placed and connected thereto, so that a composed plate is obtained.

12. Method for producing a multilayered panel according to any of claims 7 to 11, **characterized in that** vertically stacked parts of sheet-shaped panels are connected to one another by means of a bonding agent as defined in any of the preceding claims.

13. Panel (1)-(6); (1,2,3); (4,5,6); (11)-(21) made of sheet-shaped material in which long natural fibres form a fibre layer (22)-(26) in which the fibres extend substantially in a same direction and are held together by a bonding agent, **characterized in that** the fibres are connected to one another by an inorganic alkaline bonding agent which was applied to the fibre layer (22)-(26) or in which the fibre layer was soaked, after which the whole has been left to dry and subjected to a calendering operation, and wherein the bonding agent is substantially a bonding agent on a sodium silicate or potassium silicate base and the bonding agent comprises an elastomer.

14. Panel made of sheet-shaped material according to claim 13, **characterized in that** this comprises at least two vertically stacked and mutually connected sheet-shaped panels according to claim 13, so that a multilayered panel is formed, in which every two (4),(5); (5),(6) sheet-shaped panels lying one above the other have a different fibre direction.

15. Panel of sheet-shaped material according to claim 13 or 14, **characterized in that** it is a panel produced according to a method according to any of claims 1 to 12.

## Patentansprüche

1. Verfahren zur Herstellung einer Paneel (1)-(6); (1,2,3); (4,5,6); (11)-(21) aus einem blattförmigen Material, in welchem natürliche Fasern durch ein Haftmittel zusammengehalten werden, wobei aus natürlichen Langfasern eine Faserschicht (22)-(26) ausgebildet wird, in welcher die Fasern im Wesentlichen in ein und derselben Richtung verlaufen, **dadurch gekennzeichnet, dass** ein anorganisches alkalisches Haftmittel verwendet wird, um die Fasern miteinander zu verbinden, dass das Haftmittel auf die Faserschicht (22)-(26) aufgetragen wird oder die Faserschicht im Haftmittel eingeweicht wird, wonach das Ganze trocknen gelassen und einem Kalandriervorgang unterzogen wird, und dass das Haftmittel im Wesentlichen ein Haftmittel auf Natriumsilikat- oder Kaliumsilikatbasis ist und das Haftmittel ein Elastomer umfasst.

2. Verfahren zur Herstellung einer Paneel (1)-(6); (1,2,3); (4,5,6); (11)-(21) aus einem blattförmigen Material nach Anspruch 1, **dadurch gekennzeichnet, dass** das Gewichtsverhältnis des Elastomers zum Gesamttrockengewicht des Haftmittels größer als 10 % ist.

3. Verfahren zur Herstellung einer Paneel (1)-(6); (1,2,3); (4,5,6); (11)-(21) aus einem blattförmigen Material nach Anspruch 1 oder 2, **dadurch gekennzeichnet, dass** wenigstens 90 %, vorzugsweise wenigstens 95 % der Fasern eine Länge von wenigstens 10 cm aufweisen.

4. Verfahren zur Herstellung einer Paneel aus einem blattförmigen Material nach einem der vorhergehenden Ansprüche, **dadurch gekennzeichnet, dass** die Fasern im Wesentlichen Bastfasern, wie unter anderem aus Flachs, Hanf, Ramie, Sisal, Kokoshaar, Jute oder Brennnessel gewonnene Fasern sind.

5. Verfahren zur Herstellung einer Paneel aus einem blattförmigen Material nach einem der vorhergehenden Ansprüche, **dadurch gekennzeichnet, dass** während des Kämmens der Fasern im Zuge eines Spinnvorgangs eine breit gefächerte Fasergruppe erhalten wird, in welcher die Fasern sich seitlich nebeneinander im Wesentlichen in der gleichen Richtung erstrecken, und dass eine oder mehrere aneinander angrenzende Fasergruppen aus dem Spinnvorgang zur Ausbildung der Faserschicht verwendet werden.

6. Verfahren zur Herstellung einer Paneel aus einem blattförmigen Material nach einem der Ansprüche 1 bis 4, **dadurch gekennzeichnet, dass** die Faserschicht (23), (24) aus einer Anzahl von beim Spinnvorgang erzeugten und nebeneinander angeordneten Faserbündeln oder Faserdochten ausgebildet wird und dass die aneinander angrenzenden Faserbündel (23)-(26) oder Faserdochte durch einen Webprozess, einen Nähprozess oder einen Vernadelungsprozess zu einer kohäsiven Faserschicht zusammengefügt werden.

7. Verfahren zur Herstellung einer mehrschichtigen Paneel, **dadurch gekennzeichnet, dass** wenigstens zwei blattförmige Paneelen (1),(2),(3); (4),(5),(6) gemäß dem Verfahren nach einem der vorhergehenden Ansprüche ausgebildet werden und dass die blattförmigen Paneelen übereinanderliegend miteinander verbunden werden, so dass eine mehrschichtige Paneel (1-3), (4-6) ausgebildet wird, in welcher jede zweite übereinanderliegende blattförmige Paneel eine unterschiedliche Faserrichtung aufweist.

8. Verfahren zur Herstellung einer mehrschichtigen Paneel aus einem blattförmigen Material nach Anspruch 7, **dadurch gekennzeichnet, dass** zwischen den Faserrichtungen zweier vertikal gestapelter blattförmiger Paneelen jeweils ein Winkel von ca. 90° oder ca. 45° vorgesehen wird.

9. Verfahren zur Herstellung einer Paneel nach einem der vorhergehenden Ansprüche, **dadurch gekennzeichnet, dass** eine Reihe von bandförmigen Paneelen (7), (8), (9) gemäß einem Verfahren nach einem der vorhergehenden Ansprüche ausgebildet wird und dass die bandförmigen Paneelen (7), (8), (9) gegenseitig verwoben oder miteinander verbunden werden, so dass sie in unterschiedlichen Richtungen verlaufen und einander teilweise überlappen.

10. Verfahren zur Herstellung einer Paneel aus einem blattförmigen Material nach einem der vorhergehenden Ansprüche, **dadurch gekennzeichnet, dass** die Paneel nach ihrer Herstellung thermisch verformt oder extrudiert wird.

11. Verfahren zur Herstellung einer Paneel aus einem blattförmigen Material nach einem der Ansprüche 1 bis 10, **dadurch gekennzeichnet, dass** gemäß dem Verfahren nach einem der vorhergehenden Ansprüche eine erste und eine zweite Platte ausgebildet werden, dass zwischen der ersten und der zweiten Platte, die im Wesentlichen flach ausgeführt werden, eine Zwischenschicht mit Wabenstruktur (10) eingelegt und mit den Platten verbunden wird, so dass eine zusammengesetzte Platte erhalten wird.

12. Verfahren zur Herstellung einer mehrschichtigen Paneel nach einem der Ansprüche 7 bis 11, **dadurch gekennzeichnet, dass** vertikal gestapelte Teile von blattförmigen Paneelen mittels eines Haftmittels, wie in den vorhergehenden Ansprüchen definiert, miteinander verbunden werden.

13. Paneel (1)-(6); (1,2,3); (4,5,6); (11)-(21) aus einem blattförmigen Material, in dem natürliche Langfasern eine Faserschicht (22)-(26) ausbilden, in welcher die Fasern im Wesentlichen in ein und derselben Richtung verlaufen und durch ein Haftmittel zusammengehalten werden, **dadurch gekennzeichnet, dass** die Fasern durch ein anorganisches alkalisches Haftmittel miteinander verbunden sind, das auf die Faserschicht (22)-(26) aufgetragen wurde oder in dem die Faserschicht eingeweicht wurde, wonach das Ganze trocknen gelassen und einem Kalandriervorgang unterzogen wurde, und wobei das Haftmittel im Wesentlichen ein Haftmittel auf Natriumsilikat- oder Kaliumsilikatbasis ist und das Haftmittel ein Elastomer umfasst.

14. Paneel aus einem blattförmigen Material nach Anspruch 13, **dadurch gekennzeichnet, dass** sie wenigstens zwei vertikal gestapelte und gegenseitig verbundene blattförmige Paneelen nach Anspruch 13 umfasst, so dass eine mehrschichtige Paneel ausgebildet wird, in welcher jede zweite (4),(5); (5), (6) übereinanderliegende blattförmige Paneel eine unterschiedliche Faserrichtung aufweist.

15. Paneel aus einem blattförmigen Material nach Anspruch 13 oder 14, **dadurch gekennzeichnet, dass** es sich um eine Paneel handelt, die gemäß einem Verfahren nach einem der Ansprüche 1 bis 12 hergestellt wurde.

## Revendications

1. Procédé de fabrication d'un panneau (1)-(6) ; (1, 2, 3) ; (4, 5, 6) ; (11)-(21) constitué d'un matériau en forme de feuille dans lequel des fibres naturelles sont liées par un liant, dans lequel, à partir de fibres longues naturelles, est formée une couche de fibres (22)-(26) dans laquelle les fibres se prolongent sensiblement dans une même direction, **caractérisé en ce qu'**un liant alcalin inorganique est utilisé pour relier les fibres les unes aux autres, **en ce que** le liant est appliqué sur la couche de fibres (22)-(26) ou la couche de fibres est trempée dans le liant, après quoi l'ensemble est laissé sécher et soumis à une opération de calandrage, et **en ce que** le liant est sensiblement un liant sur une base de silicate de sodium ou de silicate de potassium et le liant comprend un élastomère.

2. Procédé de fabrication d'un panneau (1)-(6) ; (1, 2, 3) ; (4, 5, 6) ; (11)-(21) constitué d'un matériau en forme de feuille selon la revendication 1, **caractérisé en ce que** le rapport du poids de l'élastomère par rapport au poids sec total du liant est supérieur à 10 %.

3. Procédé de fabrication d'un panneau (1)-(6) ; (1, 2, 3) ; (4, 5, 6) ; (11)-(21) constitué d'un matériau en forme de feuille selon la revendication 1 ou 2, **caractérisé en ce qu'**au moins 90 %, préférablement au moins 95 % desdites fibres ont une longueur d'au moins 10 cm.

4. Procédé de fabrication d'un panneau constitué d'un matériau en forme de feuille selon l'une quelconque des revendications précédentes, **caractérisé en ce que** lesdites fibres sont sensiblement des fibres libériennes, telles que, entre autres, des fibres obtenues à partir de lin, de chanvre, de ramie, de sisal, de coco, de jute ou d'ortie.

5. Procédé de fabrication d'un panneau constitué d'un matériau en forme de feuille selon l'une quelconque des revendications précédentes, **caractérisé en ce que**, durant le peignage des fibres au cours d'un procédé de filage, un groupe de fibres largement étalé, dans lequel les fibres se prolongent côte à côte sensiblement dans la même direction, est obtenu, et **en ce qu'**un ou plusieurs groupes de fibres mutuellement adjacents issus du procédé de filage sont utilisés pour former ladite couche de fibres.

6. Procédé de fabrication d'un panneau constitué d'un matériau en forme de feuille selon l'une quelconque des revendications 1 à 4, **caractérisé en ce que** ladite couche de fibres (23), (24) est formée d'un certain nombre de faisceaux de fibres ou de mèches formé(e)s durant le procédé de filage et placé(e)s côte à côte, et **en ce que** les faisceaux de fibres (23)-(26) ou les mèches mutuellement adjacent(e)s sont lié(e)s pour produire une couche de fibres cohésive par un procédé de tissage, un procédé de couture ou un procédé d'aiguilletage.

7. Procédé de fabrication d'un panneau multicouche, **caractérisé en ce qu'**au moins deux panneaux en forme de feuille (1), (2), (3) ; (4), (5), (6) sont formés par le procédé selon l'une des revendications précédentes, et **en ce que** ces panneaux en forme de feuille sont reliés les uns aux autres, reposant l'un au-dessus de l'autre, de telle sorte qu'un panneau multicouche (1-3), (4-6), dans lequel tous les deux panneaux en forme de feuille reposant l'un au-dessus de l'autre ont une direction différente de fibres, soit formé.

8. Procédé de fabrication d'un panneau multicouche constitué d'un matériau en forme de feuille selon la revendication 7, **caractérisé en ce qu'**entre les directions de fibres de deux panneaux en forme de feuille superposés verticalement, il y a respectivement un angle d'environ 90 ° ou d'environ 45 °.

9. Procédé de fabrication d'un panneau selon l'une quelconque des revendications précédentes, **caractérisé en ce qu'**une série de panneaux en forme de bande (7), (8), (9) est formée par un procédé selon l'une des revendications précédentes, et **en ce que** ces panneaux en forme de bande (7), (8), (9) sont tissés ensemble ou sont reliés les uns aux autres de telle sorte qu'ils s'étendent dans différentes directions et se recouvrent partiellement les uns les autres.

10. Procédé de fabrication d'un panneau constitué d'un matériau en forme de feuille selon l'une quelconque des revendications précédentes, **caractérisé en ce que** le panneau, après sa fabrication, est déformé par un procédé thermique ou extrudé.

11. Procédé de fabrication d'un panneau constitué d'un matériau en forme de feuille selon l'une quelconque des revendications 1 à 10, **caractérisé en ce qu'**une première plaque et une deuxième plaque sont formées par le procédé selon l'une des revendications précédentes, et **en ce qu'**entre cette première plaque et cette deuxième plaque, qui sont réalisées de façon à être sensiblement plates, une couche intermédiaire ayant une structure en nid d'abeilles (10) est placée et reliée auxdites première et deuxième plaque, de telle sorte qu'une plaque composite soit obtenue.

12. Procédé de fabrication d'un panneau multicouche selon l'une quelconque des revendications 7 à 11, **caractérisé en ce que** des parties superposées verticalement de panneaux en forme de feuille sont reliées les unes aux autres au moyen d'un liant tel que défini dans l'une quelconque des revendications précédentes.

13. Panneau (1)-(6) ; (1, 2, 3) ; (4, 5, 6) ; (11)-(21) constitué d'un matériau en forme de feuille dans lequel des fibres longues naturelles forment une couche de fibres (22)-(26) dans laquelle les fibres se prolongent sensiblement dans une même direction et sont liées par un liant, **caractérisé en ce que** les fibres sont reliées les unes aux autres par un liant alcalin inorganique qui a été appliqué sur la couche de fibres (22) (26) ou dans lequel la couche de fibres a été trempée, après quoi l'ensemble a été laissé sécher et soumis à une opération de calandrage, et dans lequel le liant est sensiblement un liant sur une base de silicate de sodium ou de silicate de potassium et le liant comprend un élastomère.

14. Panneau constitué d'un matériau en forme de feuille selon la revendication 13, **caractérisé en ce qu'**il comprend au moins deux panneaux en forme de feuille superposés verticalement et reliés les uns aux autres selon la revendication 13, de telle sorte qu'un panneau multicouche soit formé, dans lequel tous les deux (4), (5) ; (5), (6) panneaux en forme de feuille reposant l'un au-dessus de l'autre ont une direction de fibre différente.

15. Panneau constitué d'un matériau en forme de feuille selon la revendication 13 ou 14, **caractérisé en ce qu'**il s'agit d'un panneau fabriqué par un procédé selon l'une quelconque des revendications 1 à 12.
